(19) Europäisches Patentamt / European Patent Office / Office européen des brevets

(11) **EP 2 759 871 A1**

(12) **EUROPEAN PATENT APPLICATION**

(43) Date of publication:
**30.07.2014 Bulletin 2014/31**

(51) Int Cl.:
**G02F 1/1337** (2006.01)     **G02F 1/1347** (2006.01)

(21) Application number: **14020007.2**

(22) Date of filing: **22.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.01.2013 JP 2013012121**
**25.01.2013 JP 2013012122**

(71) Applicant: **Stanley Electric Co., Ltd.**
**Meguro-ku**
**Tokyo (JP)**

(72) Inventor: **Iwamoto, Yoshihisa**
**Tokyo (JP)**

(74) Representative: **Wimmer, Hubert**
**WAGNER & GEYER**
**Gewürzmühlstrasse 5**
**80538 München (DE)**

(54) **Vertically oriented liquid crystal display device**

(57)     A liquid crystal display device comprising:
a liquid crystal display element, and
a drive circuit suitable for applying a voltage across opposing electrodes of the liquid crystal display element to have a display area put on alternating bright/dark displays at frequencies of 0.5Hz to 5Hz, wherein:
(α) a layer (13c, 13d) designed to reinforce vertical orientation control over liquid crystal molecules is disposed between a vertically oriented film (13a, 13b) and a liquid crystal layer (15) of the liquid crystal display element, and pretilt angle in the liquid crystal layer is 87° or more and 89.52° or less, or
(β) the pretilt angle in the liquid crystal layer (15) of the liquid crystal display element is 87° or more and 89.21° or less.

**FI G. 9**

**Description**

BACKGROUND OF THE INVENTION

A) FIELD OF THE INVENTION

The present invention relates to a liquid crystal display device and equipment mounted with the liquid crystal display device.

B) DESCRIPTION OF THE RELATED ART

In general, a vertically oriented liquid crystal display element is configured by placing a vertically oriented liquid crystal cell between polarizing plates set roughly in a crossed Nicol arrangement. A vertically oriented liquid crystal cell is a liquid crystal cell in which the liquid crystal molecules of the liquid crystal layer inserted between top and bottom substrates are oriented roughly vertically with respect to the substrates. In a vertically oriented liquid crystal display element, the light transmittance of the background display area (voltage non-applied area) as observed from the normal direction to the substrates is very low, roughly equal to the light transmittance of the two polarizing plates set in a crossed Nicol arrangement. For this reason, a vertically oriented liquid crystal display element can realize a high-contrast display relatively easily.

Several methods to uniformly orient liquid crystal molecules are known. These include (i) a method designed to realize uniform orientation via a surface profile effect made possible by oblique evaporation-depositing a metal oxide, such as SiOx, over the inside surface of the substrate as an oriented film and forming a saw-shape pattern on the deposited surface, (ii) the so-called light orientation treatment method (for instance, see Japanese Patent No. 2872628, Official Gazette), designed to form an organic oriented film over the inside surface of the substrate by laying a polyimide or other organic film and irradiating it with ultraviolet light in a direction oblique to the normal direction to the substrate, and (iii) a method designed to form an oriented film having a specific surface free energy over the inside surface of the substrate and provided with a rubbing treatment (for instance, see Japanese Unexamined Patent Publication (Kokai) No. 2005-234254, Official Gazette). These are monodomain orientation treatment methods capable of orienting the liquid crystal molecules in the liquid crystal layer of the vertically oriented liquid crystal cell in a specific direction during voltage non-applied periods.

In addition to high-contrast displays when observed from the front, a monodomain vertically oriented liquid crystal display element is capable of providing a wide viewing angle characteristic for the background display area and dark display periods by placing a viewing angle compensation plate with negative uniaxial and/or biaxial optical anisotropy between at least either of the top and bottom substrates and the polarizing plate. Moreover, since it also has a good viewing angle characteristic for the best viewing direction and the directions perpendicular to it during bright display periods, it is widely used for applications in which particular importance is attached to viewing angle characteristics for the three directions consisting of left, right and up or left, right and down, e.g. vehicle-mounted liquid crystal display devices.

SUMMARY OF THE INVENTION

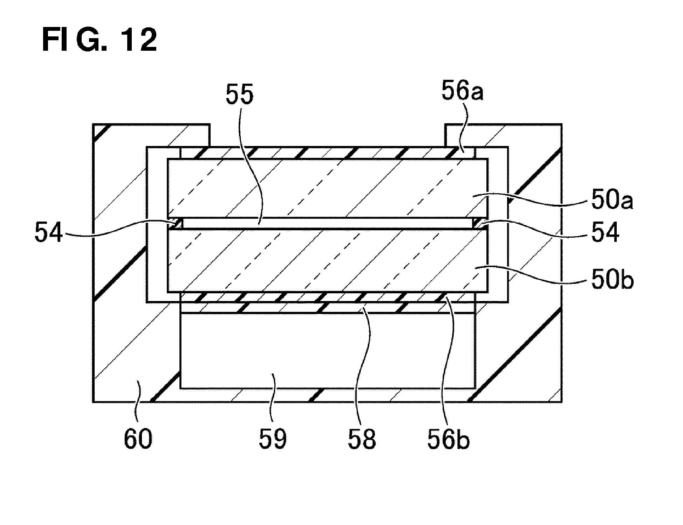

Fig. 12 is a schematic cross-sectional view illustrating an example of a monodomain vertically oriented liquid crystal display device. A liquid crystal layer 55 is located in a region surrounded by a frame-shaped sealer 54 and sandwiched between a top substrate (upperside substrate) 50a and bottom substrate (lower-side substrate) 50b, both featuring an electrode and oriented film. The liquid crystal layer 55 is a liquid crystal layer in which liquid crystal molecules are oriented more or less vertically with respect to substrates 50a and 50b. The oriented films of both substrates 50a and 50b have been provided with an orientation treatment aimed at orienting the liquid crystal molecules in one direction. On the respective surfaces of substrate 50a and 50b located on the opposite side to the liquid crystal layer 55, a top polarizing plate 56a and bottom polarizing plate 56b are provided in, for instance, a crossed Nicol arrangement. The liquid crystal display element portion of the liquid crystal display device is configured in such a manner as to comprise substrates 50a and 50b, the sealer 54, liquid crystal layer 55, and polarizing plate 56a and 56b.

A backlight 59 is provided on the backside of the liquid crystal display element portion, with an optical film 58, comprising, for instance, a diffusion plate and/or brightness enhancement film, squeezed between the laminated liquid crystal display element portion and the backlight 59. The liquid crystal display element, optical film 58 and backlight 59 are fixed at appropriate positions inside a housing (chassis) 60.

If a vibration is applied to a monodomain vertically oriented liquid crystal display device, dark regions are sometimes generated inside the brightly lit display area, causing display unevenness. This occurs when an alternating bright/dark blinking display is performed at a low frequency, e.g. several Hz or less.

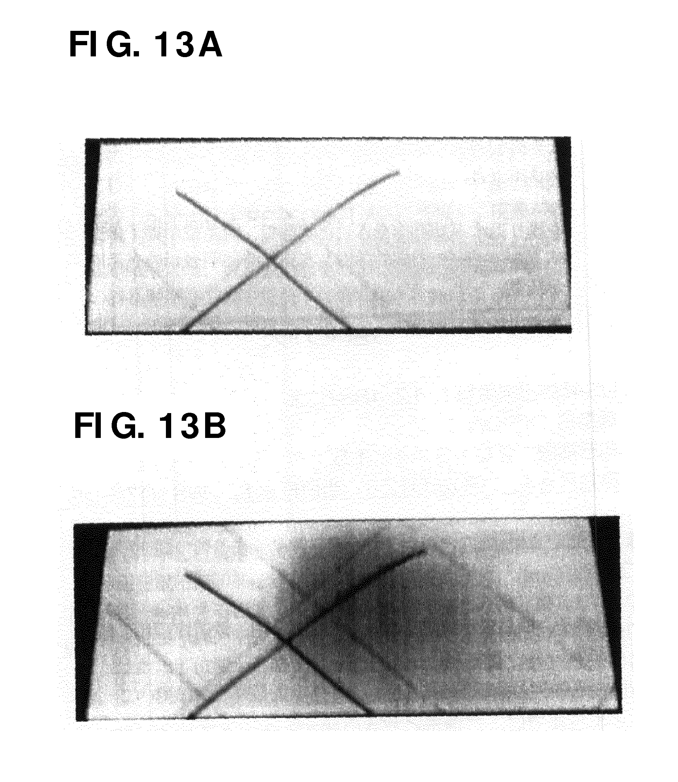

Fig. 13A is a photograph illustrating the bright display state of a monodomain vertically oriented liquid crystal display device when the display area was displayed into a blinking operation without applying a vibration. The liquid crystal molecules are oriented in the top-to-bottom direction of the photograph. The cross mark drawn in black shows the absorption axes of the top and bottom polarizing plates. The directions of the absorption axes of the top and bottom polarizing plates roughly make a 45° angle with the orientation direction of the liquid crystal molecules in clockwise and counterclockwise directions, respectively. A uniform bright display state has been obtained within the surface of the rectangle-shaped display area. Blinking for alternating bright/dark displays took place at 3Hz.

Fig. 13B is a photograph illustrating the state of the display area of the monodomain vertically oriented liquid crystal display device when an external 5Hz sinusoidal vibration was applied. A dark region has appeared in the display area, and rubbing scratched defects are observed along the orientation direction of the liquid crystal molecules.

The generation of vibrations is a prominent feature of, for instance, a traveling motor vehicle, rail vehicle or aircraft and a factory in which machine presses and other machines and equipment are installed. For this reason, there is a high probability that a vertically oriented liquid crystal display device installed on such an industrial machine or equipment or in such an environment experiences a malfunction in the form of the appearance of dark regions in the display area.

The present invention aims to provide a liquid crystal display device with good display performance and equipment mounted with such a liquid crystal display device.

One aspect of the present invention provides a liquid crystal display device comprising:

a liquid crystal display element featuring (i) a first and second substrate placed opposite each other that feature, on the pair of opposing surfaces thereof, a pair of opposing electrodes constituting a display area and vertically oriented films, at least one of the vertically oriented films having been provided with an orientation treatment aimed at introducing a pretilt in a liquid crystal layer, (ii) a liquid crystal layer sandwiched between the first and second substrates that contains liquid crystal material with negative dielectric anisotropy and is vertically oriented with slight tilting, and (iii) a first and second polarizing plates that are placed, in a crossed Nicol arrangement, on the pair of surfaces of the first and second substrates located on the opposite side to the liquid crystal layer and have absorption axes that are each at a 45° angle to the orientation direction of the liquid crystal molecules located in the mid-thickness region of the liquid crystal layer,

a light source placed on the second polarizing plate-side of the liquid crystal display element, and

a drive circuit electrically connected to the electrodes of the first and second substrates, the drive circuit applying a voltage across the opposing electrodes of the liquid crystal display element to have a display area put on alternating bright/dark displays at frequencies of 0.5Hz to 5Hz, the display area performing a blinking operation powered by the voltage, and the display area maintaining display uniformity during bright display periods when a 2Hz to 30Hz vibration or a 0.5Hz to 3Hz external force is applied, wherein:

(α) a layer designed to reinforce the vertical orientation control over the liquid crystal molecules in the liquid crystal layer is disposed at least between one of the vertically oriented films and the liquid crystal layer, and pretilt angle in the liquid crystal layer of the liquid crystal display element is 87° or more and 89.52° or less, or

(β) the pretilt angle in the liquid crystal layer of the liquid crystal display element is 87° or more and 89.21° or less.

Another aspect of the present invention provides equipment mounted with a liquid crystal display device comprising:

a liquid crystal display device as described above, and

an external device carrying the liquid crystal display device and subjecting the liquid crystal display device to 2Hz to 30Hz vibrations or 0.5Hz to 3Hz external forces, wherein

the display area of the liquid crystal display device maintains display uniformity during bright display periods when the vibrations or external forces are applied.

Based on the present invention, it is possible to provide a liquid crystal display device with good display performance and equipment mounted with such a liquid crystal display device.

BRIEF DESCRIPTION OF THE DRAWINGS

Figs. 1A and 1B are a schematic cross-sectional view and plan view illustrating part of a monodomain vertically oriented liquid crystal display device used in the experiments, while Fig. 1C is a schematic cross-sectional view illustrating the monodomain vertically oriented liquid crystal display device in its entirety.

Fig. 2 is a graph showing the maximum acceleration realizable at each vibration frequency.

Fig. 3 is a graph showing the results of an investigation into the acceleration at which display uniformity can no longer be maintained for each vibration frequency applied to the liquid crystal display device.

Fig. 4 is a graph whose horizontal and vertical axes represent pretilt angle and the acceleration at which display uniformity can no longer be maintained.

Fig. 5 is a graph showing the results of an investigation into the acceleration at which display uniformity can no longer be obtained when the display area of the sample with a pretilt angle of 89.59° was made to blink at blinking frequencies of 1 Hz, 2Hz, 3Hz 4Hz and 5Hz for each vibration frequency applied to the liquid crystal display device.

Fig. 6A is a schematic plan view illustrating an orientation model of liquid crystal molecules 15a located in the mid-thickness region of the liquid crystal layer of the monodomain vertically oriented liquid crystal display element illustrated in Fig. 1A, while Fig. 6B is a schematic plan view illustrating the orientation state of mid-thickness region molecules 15a of the liquid crystal layer when a voltage is applied across electrodes 12a and 12b.

Fig. 7A is a schematic plan view illustrating the orientation state of mid-thickness region molecules 15a of the liquid crystal layer of a liquid crystal display element when a vibration is applied during a voltage non-applied period, while Fig. 7B is a schematic plan view illustrating the mid-thickness region of the liquid crystal layer 15 when a voltage is applied to the liquid crystal molecules 15a to obtain a bright display as they are in the state illustrated in Fig. 7A.

Fig. 8A is a schematic cross-sectional view illustrating a monodomain vertically oriented liquid crystal display device used in the experiments, while Fig. 8B is a schematic plan view illustrating the orientation state of mid-thickness region molecules 15a of the liquid crystal layer of a liquid crystal display device to which a vibration is applied.

Fig. 9 is a schematic cross-sectional view illustrating the liquid crystal display element portion of the monodomain vertically oriented liquid crystal display device under working example 1.

Fig. 10 is a graph showing the results of an investigation into the acceleration at which display uniformity can no longer be maintained for each vibration frequency applied to a liquid crystal display device.

Fig. 11 is a schematic diagram illustrating part of equipment mounted with a liquid crystal display device under working example 3.

Fig. 12 is a schematic cross-sectional view illustrating an example of a monodomain vertically oriented liquid crystal display device.

Fig. 13A is a photograph illustrating the bright display state of the display area of a monodomain vertically oriented liquid crystal display device when it is put into a blinking operation without applying a vibration, while Fig. 13B is a photograph illustrating the display area of the monodomain vertically oriented liquid crystal display device when an external 5Hz sinusoidal vibration is applied.

DESCRIPTION OF EMBODIMENTS

The inventor of the present application conducted various experiments on display performance when a vertically oriented liquid crystal display device is subjected to an external vibration, etc.

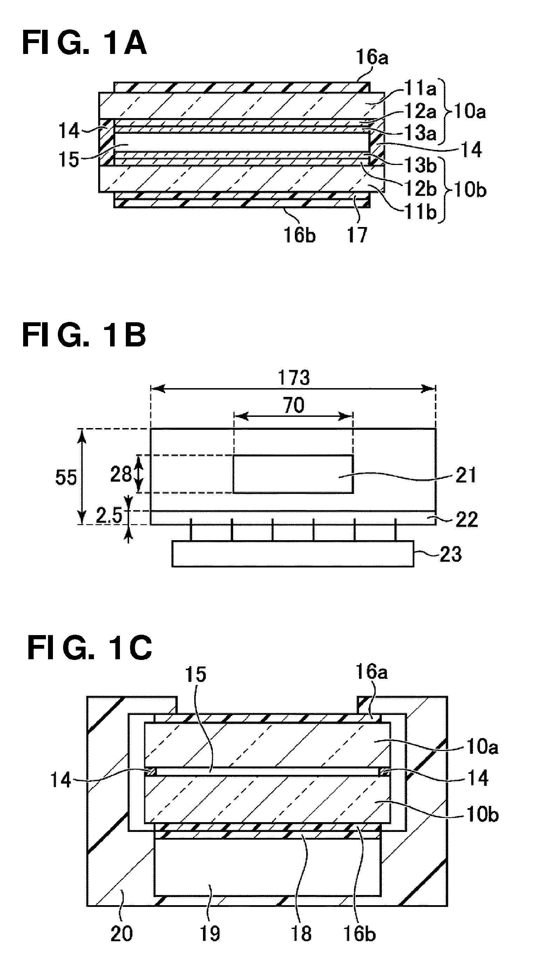

Fig. 1A is a schematic cross-sectional view illustrating part of a monodomain vertically oriented liquid crystal display device (liquid crystal display element portion) used in the experiments. First, the preparation method is described.

Two 0.7mm-thick alkali-glass substrates, each provided with a polishing treatment on one side, followed by the formation on that surface of an $SiO_2$ undercoat and transparent electrically conductive film (ITO film) with a sheet resistance of $30\Omega\square$ in that order, are furnished. The substrates are subjected to ITO film patterning in a photolithography step and etching step to prepare a top transparent substrate 11a on which a top transparent electrode 12a (segment electrode) has been formed and a bottom transparent electrode 12b (common electrode) on which a bottom transparent substrate 11b has been formed. If necessary, an $SiO_2$ or other insulation film may be formed on the surfaces of the ITO electrodes 12a and 12b.

Transparent glass substrates 11 a and 11 b, on which electrodes 12a and 12b have respectively been formed, are washed with an alkaline solution, etc., and their surfaces on which electrodes 12a and 12b are respectively formed are coated with vertically oriented film material manufactured by Nissan Chemical Industries, Ltd. using the flexographic printing method and calcined at 180°C for 30 minutes in a clean oven. Next, each of transparent substrates 11a and 11 b is provided with a rubbing treatment (an orientation treatment) using cotton rubbing cloth, and a top oriented film 13a and bottom oriented film 13b are formed over the electrode 12a and 12b, respectively. In this manner, the top substrate 10a, comprising a top transparent substrate 11a, top transparent electrode 12a and top oriented film 13a, and the bottom substrate 10b, comprising a bottom transparent substrate 11 b, bottom transparent electrode 12b and bottom oriented film 13b, are prepared.

Over the surface of the top substrate 10a on which the oriented film 13a is formed, approx. 4μm-diameter plastic spacer particles manufactured by Sekisui Chemical Co., Ltd. are applied using the dry sprinkling method. Over the surface of the bottom substrate 10b on which the oriented film 13b is formed, thermosetting sealer material 14 manufactured by Mitsui Chemicals, Inc., containing approx. 4μm-diameter rod-shaped glass spacer pieces manufactured by Nippon Electric Glass Co., Ltd., is applied in a predetermined pattern using a dispenser. After this, substrates 10a and 10b are put together in such a manner that their surfaces over which electrode 12a and oriented film 13a, on the one hand, and electrode 12b and oriented film 13b, on the other, face each other and that their rubbing directions are anti-parallel, followed by the curing of the sealer material 14 via thermocompression bonding to finish the formation of an empty cell.

Liquid crystal material with a negative dielectric anisotropy, $\Delta\varepsilon$, manufactured by DIC Corp. is injected into the empty cell using the vacuum injection method, followed by sealing and calcination at 120°C for 1 hour.

A top polarizing plate 16a and a bottom polarizing plate 16b are sticked on the respective surfaces of substrates 10a and 10b each located on the opposite side to the liquid crystal layer 15 in such a manner that they are in a crossed Nicol arrangement and that the orientations of their absorption axes are each at a 45° angle to the orientation direction of mid-thickness region molecules of the liquid crystal layer (liquid crystal molecules located in the mid-thickness region of the liquid crystal layer 15) as determined by rubbing direction on both substrates. As polarizing plates 16a and 16b, SHC13U manufactured by Polatechno Co., Ltd., for instance, may be used. If necessary, a viewing angle compensation plate may be inserted between substrate 10a and polarizing plate 16a and/or between substrate 10b and polarizing plate 16b. In the case of the liquid crystal display element illustrated in Fig. 1A, a viewing angle compensation plate 17 with negative biaxial optical anisotropy that has an in-plane phase difference of 55nm and a thickness-direction phase difference of 220nm was inserted between substrate 10b and polarizing plate 16b.

The pretilt angle in the liquid crystal layer 15 was set to 89.1° to 89.95° by adjusting rubbing conditions. The measured thickness of the cell was around 3.6μm to 3.8μ. The retardation of the liquid crystal layer 15 was around 330nm to 360nm.

The liquid crystal display element illustrated in Fig. 1A is configured in such a manner as to comprise a top substrate 10a and bottom substrate 10b, placed apart roughly in parallel and facing each other, and a liquid crystal layer 15 inserted between substrates 10a and 10b.

The top substrate 10a comprises a top transparent substrate 11a, a top transparent electrode 12a formed on the inside surface of the top transparent substrate 11a, and a top oriented film 13a formed on top of the top transparent electrode 12a. Similarly, the bottom substrate 10b comprises a bottom transparent substrate 11 b, a bottom transparent electrode 12b formed on the inside surface of the bottom transparent substrate 11 b, and a bottom oriented film 13b formed on top of the bottom transparent electrode 12b. Facing each other, the top transparent electrode 12a and bottom transparent electrode 12b constitute a display area.

The liquid crystal layer 15 is placed in a region surrounded by the sealer 14 and sandwiched between the oriented film 13a of the top substrate 10a and the oriented film 13b of the bottom substrate 10b. The liquid crystal layer 15 is a vertically oriented liquid crystal layer with slight tilting. Oriented films 13a and 13b have been provided with an orientation treatment to introduce monodomain vertical orientation in the liquid crystal layer 15.

A top polarizing plate 16a and bottom polarizing plate 16b are provided on the respective surfaces of the top substrate 10a and bottom substrate 10b each opposite to the liquid crystal layer 15. They are placed roughly in a crossed Nicol arrangement, with their absorption axes each making a 45° angle with the orientation direction of mid-thickness region molecules of the liquid crystal layer. A viewing angle compensation plate 17 is inserted between the bottom substrate 10b and the polarizing plate 16b.

When sticking polarizing plates to a liquid crystal display element, it is difficult to bring the absorption axes of the top and bottom polarizing plates into a perfect crossed Nicol arrangement, namely, to have them cross each other at a 90° angle as projections onto a common plane. The angular variation range for successful sticking is 90°±2°. Under the present application, a crossed Nicol arrangement is achieved by adopting sticking angles that fall within the above variation range. Similarly, it is actually difficult to set the angles between each of the absorption axes of the polarizing plates and the orientation direction of mid-thickness region molecules of the liquid crystal layer to exactly 45°, so that, in this context, all angles within the 45°±2° range are expressed as "45°" under the present application.

Fig. 1B is a schematic plan view illustrating part of a monodomain vertically oriented liquid crystal display device used in the experiments. The liquid crystal display device is configured in such a manner as to comprise the liquid crystal display element illustrated in Fig. 1A and a circuit 23.

When viewed from above, the liquid crystal display element portion has a rectangular shape, 173mm wide and 55mm long. Around the center thereof, a rectangular-shaped display area 21 70mm wide and 28mm long is demarcated. Along one of the horizontal sides, a terminal area 22 2.5mm wide has been formed. The terminal area 22 features the lead terminals (external terminals) for electrodes 12a and 12b. Connected to lead frame terminals, the lead terminals for the electrodes 12a and 12b are electrically connected to the circuit 23 via the lead frame. The circuit 23 comprises, for instance, a drive circuit designed to electrically drive the liquid crystal display element and a control circuit connected to the drive circuit and designed to have the liquid crystal display element display intended patterns. The drive circuit applies a voltage across electrodes 12a and 12b to display alternating bright/dark states on the display area 21, and, powered by the applied voltage, the display area 21 performs a blinking operation. The control circuit performs the control of the on/off state of the display area 21 and other tasks.

Fig. 1C is a schematic cross-sectional view of a monodomain vertically oriented liquid crystal display device used in the experiments.

On the backside of the liquid crystal display element portion, a backlight 19 equipped with an optical film 18, e.g. a diffusion plate, is provided. The liquid crystal display element and backlight 19 are fixed at predetermined positions inside a housing (chassis) 20.

As the backlight 19, a direct-type or side light-type backlight, for instance, is used. With a direct type, an inorganic LED or other light source, for instance, is placed in a plane parallel to the display plane of the liquid crystal display element, with a film to diffuse light across the space between the light source and the liquid crystal display element provided. With a side light type, a light source is placed on a side face of a light guide plate formed of a resin, etc., with light emitted from a face of the light guide plate that is roughly parallel to the display surface of the liquid crystal display element. Here, a side light-type backlight 19 has been adopted.

The circuit 23 is placed inside or outside the housing 20.

The inventor of the present application prepared four liquid crystal display element samples with pretilt angles of 89.91°, 89.59°, 89.38° and 89.21°, and conducted experiments on display uniformity.

The alternating bright/dark blinking state of the liquid crystal display device was visually observed from the best viewing direction of the display surface (6 o'clock direction on Fig. 1 B) and various angles in the polar angle range of 0° to 40°, and the assessment that display uniformity was not obtained was made if, unlike the state illustrated by the photograph in Fig. 13A, any state indicating even a small impairment in display uniformity appeared, such as the recognition of a dark region in the display area 21 as illustrated in the photograph in Fig. 13B. In this regard, the normal direction of the display surface of the liquid crystal display device is defined as a polar angle 0°.

In the experiments, the liquid crystal display device was driven, as a rule, in the multiplex drive mode with 1/4 duty and 1/3 bias. Using a frame inversion waveform as the driving waveform, the device was operated at a frame frequency of 250Hz and a drive voltage of 5V. An alternating bright/dark blinking display was obtained by adjusting the blinking frequency over the range of 5Hz or less.

In the experiments, the liquid crystal display device was mounted on the vibration stage of dynamoelectric vibration testing equipment model VS-120-06 manufactured by IMV Corp., and sinusoidal vibrations with intended frequencies and accelerations were applied to the liquid crystal display device in the thickness direction thereof (normal direction of the display surface). The vibration frequency was adjusted, for instance, in the 2Hz to 30Hz range. However, the vibration testing equipment had an upper limit to its displacement amplitude, and this put a limit to the upper limit of acceleration (maximum acceleration).

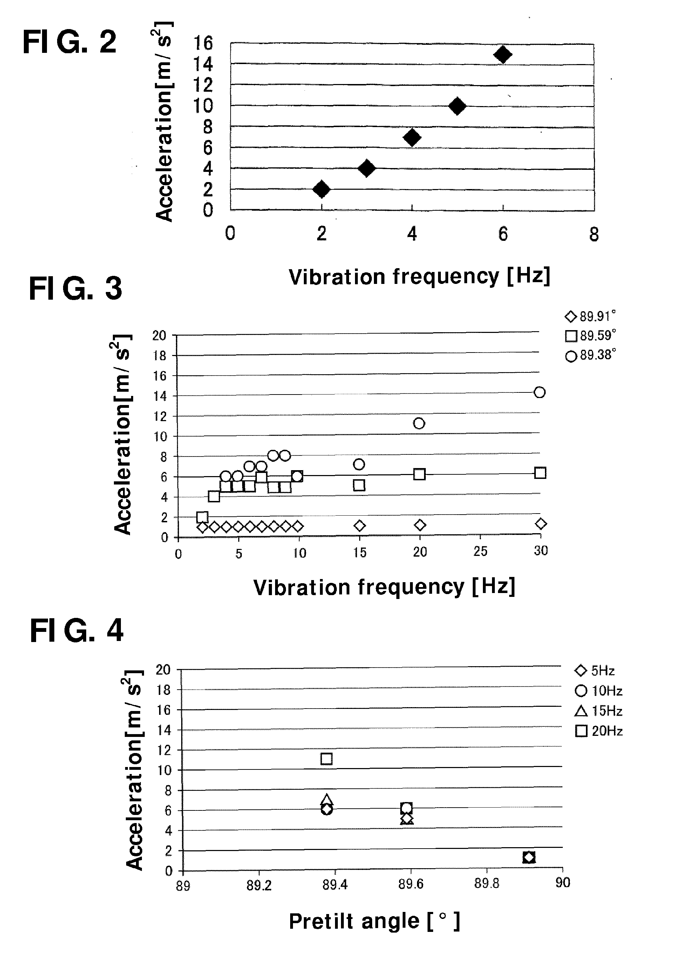

Fig. 2 is a graph showing the maximum acceleration realizable at each vibration frequency. The horizontal axis of the graph represents vibration frequency in units of Hz, while its vertical axis represents maximum acceleration in units of m/s$^2$. When the vibration frequency is 2Hz, for instance, the realizable maximum acceleration is about 2 m/s$^2$. Likewise, when the vibration frequency is 6Hz, the realizable maximum acceleration is about 15 m/s$^2$. The lower the vibration frequency becomes, the smaller the realizable maximum acceleration is. At vibration frequencies of 6Hz or less in particular, there is a possibility that the limit to acceleration poses a problem in the experiments. According to JIS C60068-2-6, there is a relationship expressed by equation (1) below between the amplitude acceleration a (m/s$^2$), displacement amplitude d (mm) and vibration frequency f (Hz) of a sinusoidal vibration.
[Equation 1]

$$a = \left(2\pi f\right)^2 \times 10^{-3} \times d \cdots \left(1\right)$$

According to equation (1), when the vibration frequency is 2Hz, for instance, the upper limit of displacement amplitude is about 12.7mm. Likewise, when the vibration frequency is 6Hz, the upper limit of displacement amplitude is about 10.5mm. With the vibration testing equipment VS-120-06, for instance, the displacement amplitude is limited to 13mm or less when the applied vibration frequency is in the 2Hz to 6Hz range.

The experiments were conducted under the equipment-related limitations described above.

The inventor of the present application first investigated the pretilt angle dependence of display uniformity. With four samples with different pretilt angles, the blinking frequency for the display area of the liquid crystal display device was fixed to 3Hz, and the acceleration at which display uniformity can no longer be obtained was investigated for each vibration frequency applied to the liquid crystal display device.

Fig. 3 is a graph plotting the acceleration at which display uniformity can no longer be maintained. The horizontal axis of the graph represents the applied vibration frequency in units of Hz, while its vertical axis represents the acceleration at which display uniformity is impaired in units of m/s$^2$. The rhombus plot belongs to the sample with a pretilt angle of 89.91°. The square plot and circle plot belong to the samples with pretilt angles of 89.59° and 89.38°, respectively.

Referring to the rhombus plot, the sample with a pretilt angle of 89.91° experiences an impairment in display uniformity at accelerations of 1 m/s$^2$ to 2 m/s$^2$ regardless of the vibration frequency. Namely, display uniformity is maintained only within the acceleration range of less than 1 m/s$^2$ to 2 m/s$^2$.

Referring to the square plot, the sample with a pretilt angle of 89.59° exhibits a tendency to experience an impairment in display uniformity even at small accelerations if the vibration frequency is in the range of less than 4Hz. When the applied vibration frequency is 4Hz or more, display uniformity is maintained even at accelerations of 5 m/s$^2$ or more. As the applied vibration frequency increases, the acceleration at which display uniformity can no longer be maintained tends to increase (high display stability at high vibration frequencies), and this tendency is pronounced in the range of less than 4Hz. Moreover, the acceleration at which display uniformity is impaired is twice as high or more at all vibration frequencies compared to the sample with a pretilt angle of 89.91°.

Reference is made to the circle plot. The sample with a pretilt angle of 89.38° maintained display uniformity in the vibration frequency range of less than 4Hz even if a sinusoidal vibration with the maximum acceleration that the vibration testing equipment is capable of generating is applied. At vibration frequencies of 4Hz or more, display uniformity is impaired, but there is a recognizable tendency that display uniformity is maintained at an acceleration of 6 m/s$^2$, a comparable value to the sample with an a pretilt angle of 89.59°, or larger. It is also the case with the sample with a pretilt angle of 89.38° that, as the applied vibration frequency increases, the acceleration at which display uniformity can no longer be maintained tends to increase (high display stability at high vibration frequencies).

Further, when an experiment was conducted on the sample with a pretilt angle of 89.21°, display uniformity was maintained in the vibration frequency range of 2Hz to 30Hz, even if a sinusoidal vibration with the maximum acceleration that the vibration testing equipment was capable of generating was applied. Namely, the sample with a pretilt angle of 89.21° has the highest display stability against vibrations among the four samples, and it was learned that, at vibration frequencies of 6Hz or more, display uniformity was maintained against accelerations of 15 m/s$^2$ (about 1.5G) or more (see Fig. 2).

Fig. 4 is a graph whose horizontal and vertical axes represent the pretilt angle and the acceleration at which display uniformity can no longer be maintained. Fig. 4 contains replots of part of the data plotted in Fig. 3. The rhombus, circle, triangle and square represent vibration frequencies applied to the liquid crystal display device of 5Hz, 10Hz, 15Hz and 20Hz.

The tendency that, as the pretilt angle decreases, the acceleration at which display uniformity is impaired increases for each vibration frequency (the smaller the pretilt angle, the higher display stability) is clearly recognizable. Another tendency is also observable that, when the pretilt angle is close to 90°, display uniformity is impaired even at small accelerations regardless of the vibration frequency, but vibration frequency-dependent differences emerge as the pretilt angle decreases. In this case, as described with reference to Fig. 3, when the applied vibration frequency is low, even small accelerations make it impossible to maintain display uniformity. The displacement amplitude of the applied sinusoidal vibration is also believed to have a bearing on the acceleration at which display uniformity is impaired.

Display uniformity depends on the pretilt angle. If the pretilt angle is small, display uniformity can be maintained at large acceleration (high display stability against vibrations). As long as the pretilt angle is 89.21° or less, display uniformity is maintained even if, for instance, sinusoidal vibrations with vibration frequencies of 2Hz to 30Hz are applied to the liquid crystal display device in the thickness direction thereof (normal direction of the display surface).

From the viewpoint of preventing the liquid crystal display element from leaking light during voltage non-applied periods, it is preferable that the pretilt angle is 87° or more, more preferably 88° or more.

Next, the inventor of the present application investigated the bright/dark blinking frequency dependence of display uniformity.

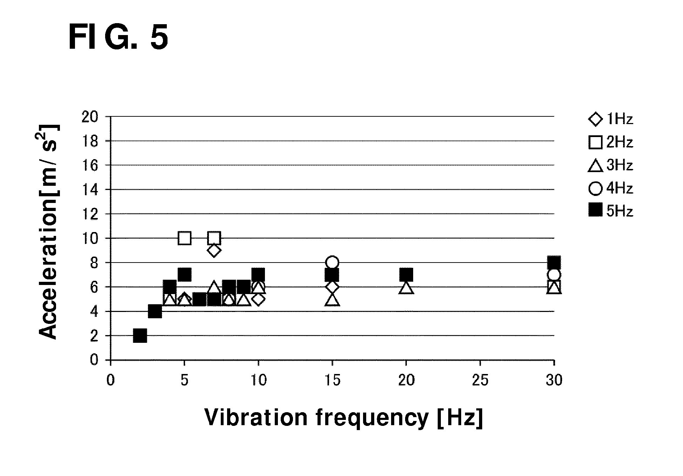

Fig. 5 is a graph showing the results of an investigation into the acceleration at which display uniformity can no longer be obtained when the display area of the sample with a pretilt angle of 89.59° was made to blink at blinking frequencies of 1 Hz, 2Hz, 3Hz, 4Hz and 5Hz for each vibration frequency applied to the liquid crystal display device. The two axes of the graph represent the same quantities as the graph of Fig. 3. The rhombus, square, triangle and circle plots represent blinking frequencies of 1 Hz, 2Hz, 3Hz and 4Hz, respectively. The black square plot represents a blinking frequency of 5Hz.

When the applied vibration frequency is in the 5Hz to 7Hz range, there is a recognizable tendency that display uniformity is maintained even at large accelerations if the device is driven at a low blinking frequency, though no particular blinking frequency-related difference is observable in other vibration frequency ranges. The results shown in Fig. 5 imply that the bright/dark blinking frequency dependence of display uniformity is small. It follows that, in the blinking frequency range of 5Hz or less, say 0.5Hz to 5Hz, a liquid crystal display device with a pretilt angle of 89.21° or less, for instance, can maintain display uniformity against vibrations in the vibration frequency range of 2Hz to 30Hz, though the experiment itself was conducted in the blinking frequency range of 1 Hz to 5Hz.

Next, the inventor of the present application investigated the driving condition and driving method dependence of display uniformity. In this experiment, the sample with a pretilt angle of 89.21° was used.

First, in the multiplex drive mode, vibrations were applied after the driving waveform was changed from frame inversion to line inversion. When vibrations were applied by changing the frequency and acceleration in the vibration frequency range of 30Hz or less, followed by an observation of appearance, display uniformity was not impaired in the bright/dark blinking frequency range of 0.5Hz to 5Hz. The duty ratio was then changed in the range of 1/16 duty or less, with the driving voltage that provides the maximum contrast when observed from the front applied, but display uniformity was maintained. Further, though a static drive was performed at a driving voltage of about 2.9Vrms, equivalent to a 5V drive at 1/4 duty and 1/3 bias, display uniformity was confirmed to be maintained. When a liquid crystal display device with a pretilt angle of 89.21° or less is operated in the bright/dark blinking frequency range of 0.5Hz to 5Hz whilst being subjected to vibrations at a vibration frequency of 30Hz or less, display uniformity is maintained without being subjected to any particular restrictions imposed by the driving conditions or driving method. A multiplex drive with a duty ratio of 1/16 duty or less, for instance, can achieve uniform display.

Though, in the experiments, a liquid crystal display device featuring a liquid crystal display element and a backlight 19 fixed inside a housing 20 was used, the inventor of the present application also performed vibration tests after mounting the backlight 19 on the light emitting surface of the liquid crystal display element and applying adhesive tape over part of the liquid crystal display element, for instance, a section other than the display area 21 to put the liquid crystal display element and backlight 19 into a fully contacting and fixed state as appropriate (a fully contacting and fixed state the of liquid crystal display element and backlight 19 achieved without the use of a housing 20). In this case, similar results to those obtained with a liquid crystal display device featuring a liquid crystal display element and a backlight 19 fixed inside a housing 20 were obtained.

The inventor of the present application hypothesized the reasons for the impairment of display uniformity as described below.

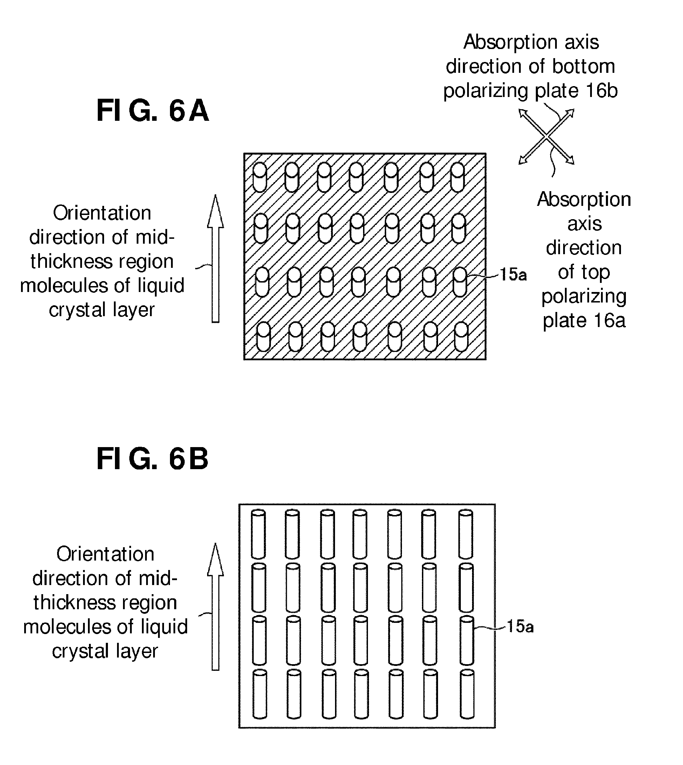

Fig. 6A is a schematic plan view illustrating an orientation model of liquid crystal molecules 15a located in the mid-thickness region of the liquid crystal layer of the monodomain vertically oriented liquid crystal display element illustrated in Fig. 1A. As illustrated in this drawing, liquid crystal molecules 15a uniformly go into a more or less vertically orientated state with a slight tilt during a voltage non-applied period in conformity with rubbing treatment direction or other orientation direction. At the left of the drawing, the orientation direction of mid-thickness region molecules 15a of the liquid crystal layer is shown with an arrow. Near the top left corner of the drawing, the absorption axis directions of the top and bottom polarizing plates 16a and 16b configured in a crossed Nicol arrangement are shown.

Fig. 6B is a schematic plan view illustrating the orientation state of mid-thickness region molecules 15a of the liquid crystal layer when a voltage is applied across electrodes 12a and 12b. The application of a voltage tilts the orientation of the liquid crystal molecules 15a over uniformly and dramatically according to the predetermined orientation direction.

Let us consider an example in which an external vibration is applied to a liquid crystal display element which is performing a blinking operation (alternating bright/dark displays) as a result of an alternate application of a voltage equal to or above the threshold voltage and one below it based on the use of a circuit 23.

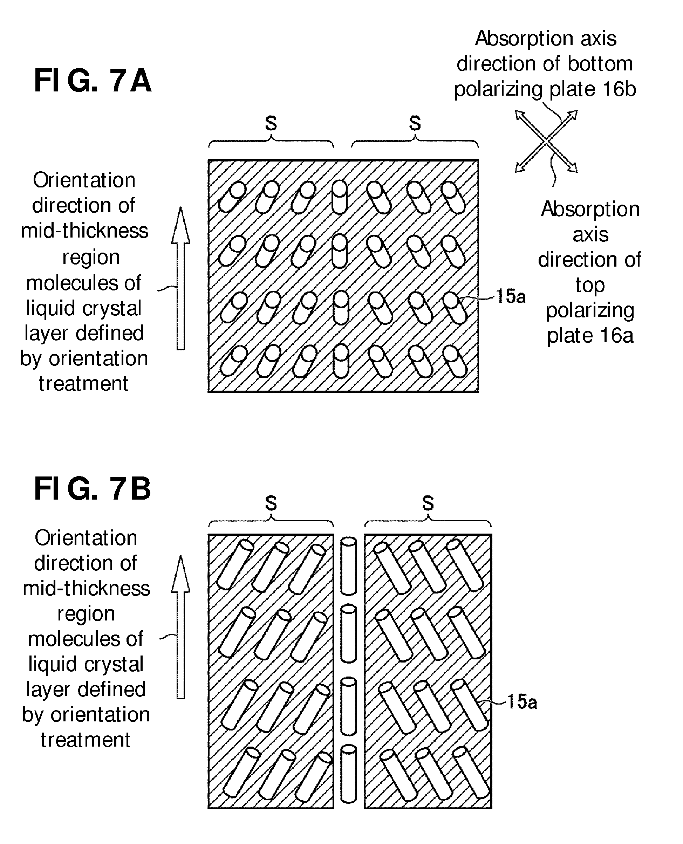

Fig. 7A is a schematic plan view illustrating the orientation state of mid-thickness region molecules 15a of the liquid crystal layer of a liquid crystal display element when a vibration is applied while a voltage below the threshold voltage is applied (during a voltage non-applied period). The stress exerted by the vibration bends substrates 10a and 10b, and this results in the formation of regions S in which liquid crystal molecules 15a tilt slightly in a direction different from the orientation direction defined by an orientation treatment.

Fig. 7B is a schematic plan view illustrating the mid-thickness region of the liquid crystal layer 15 when a voltage equal to or above the threshold (a voltage to obtain a bright display) is applied to the liquid crystal molecules 15a as they are in the state illustrated in Fig. 7A. As a result of the application of the voltage, mid-thickness region molecules 15a of the liquid crystal layer in regions S tilt over in directions that are different from the orientation direction defined by an orientation treatment (direction at 45° from the absorption axis of either polarizing plate 16a or 16b). This is believed to cause regions S to turn dark during bright display periods.

The reason why liquid crystal molecules 15a tilt in directions different from the orientation direction defined by an orientation treatment seems to be that, in the case of a vertically oriented liquid crystal display element with a pretilt angle of almost 90°, the surfaces of substrates 10a and 10b that provide them with interfaces with the liquid crystal layer 15 only have weak orientation control (control that substrates 10a and 10b have over in-plane-direction orientation). If the pretilt angle is small, substrates 10a and 10b have strong control over in-plane-direction orientation. This fact is believed to explain the experiment result that the smaller the pretilt angle, the better the liquid crystal display element maintained display uniformity against large accelerations, with an impairment in display uniformity not occurring to the liquid crystal display element with a pretilt angle of 89.21°. The fact that display unevenness does not easily occur at small accelerations is believed to be attributable to a small deformation that substrates 10a and 10b undergo. Notably, horizontally oriented liquid crystal display elements do not generate dark regions even if a vibration is applied.

The inventor of the present application conducted experiments to verify the above-proposed reason for the generation of dark regions.

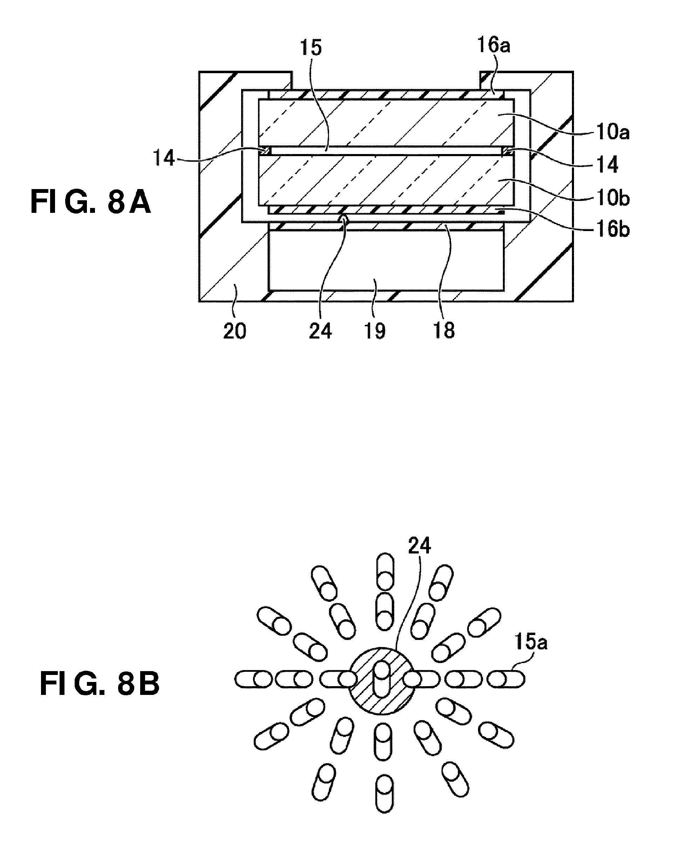

Fig. 8A is a schematic cross-sectional view illustrating a monodomain vertically oriented liquid crystal display device used in the experiments. The liquid crystal display device illustrated in this drawing differs from the liquid crystal display device of Fig. 1C in that it includes a protrusion 24 placed between the backlight 19, which features an optical film 18, and the liquid crystal display element. The protrusion 24 is a rigid roughly cone-shaped projection about 1 mm high. With the apex of the protrusion 24 and the backside (bottom polarizing plate 16b) of the liquid crystal display element kept in contact, a vibration was applied to the liquid crystal display device, which was blinking at a bright/dark blinking frequency of 1 Hz. A phenomenon was then observed such that a dark region that was centered around the location of the protrusion 24 and resembled the letter X whose strokes were roughly in parallel with the directions of the absorption axes of the top and bottom polarizing plates 16a and 16b appeared in the brightly lit display area 21. When the sample with a pretilt angle of 89.91° was used as the liquid crystal display element, the roughly X-shaped dark region was recognized at an acceleration of 2 m/s$^2$.

Fig. 8B is a schematic plan view illustrating the orientation state of mid-thickness region molecules 15a of the liquid crystal layer of a liquid crystal display device to which a vibration is applied. In this drawing, the orientation state during a dark display period (voltage non-applied period) is shown. The protrusion 24 causes substrates 10a and 10b to bend locally into a crater shape centered around a point that corresponds to the location of the protrusion 24. As a result, mid-thickness region molecules 15a of the liquid crystal layer tilt in the radial direction centered on a point that corresponds to the location of the protrusion 24. If a voltage is applied for a bright display when mid-thickness region molecules 15a of the liquid crystal layer are in that state, liquid crystal molecules 15a further tilt while maintaining the radial orientation. This is believed to have caused a radially oriented region with spokes that are roughly parallel with the directions of the absorption axes of polarizing plates 16a and 16b to darken and end up being observed more or less as X-shaped.

The inventor of the present application further conducted an experiment in which a liquid crystal display device performing an alternating bright/dark blinking display was periodically tapped or pressed with a finger. More specifically, the liquid crystal display device illustrated in Fig. 1C was used, and the blinking frequency was set to 1 Hz. A non-electrified region of the display area 21 was then tapped or pressed with a pressure small enough to maintain the more or less vertically orientated state of liquid crystal molecules (the dark state of the polarizing plates arranged in crossed Nicol configuration as observed from the front). The tapping or pressing period was adjusted within the vibration range of 0.5Hz to 3Hz. Depending on the pressure or period of tapping or pressing, a dark region was sometimes observed within the brightly lit display area approximately 1 cm from the site where the tapping or pressing action occurred.

The act of periodically tapping or pressing with a finger is one that directly and periodically applies an external force to the surface of the substrate 10a of the liquid crystal display element and causes substrate 10a to deform. For this reason, as was the case with the experiment in which a projection 24 was introduced, substrates 10a and 10b bend into a crater-like shape centered around the site where the tapping or pressing action occurred and its surrounding area, and, because of this influence, mid-thickness region molecules 15a of the liquid crystal layer go into an orientation state that is different from the orientation direction defined by an orientation treatment during dark display periods. It is believed that the application of a voltage for a bright display, then, causes liquid crystal molecules 15a to tilt over while still being in a misoriented state, thus resulting in the formation of a dark region.

When an experiment incorporating a protrusion 24 and another designed to periodically apply an external force were conducted while, in both cases, adjusting the blinking frequency in the 0.5Hz to 5Hz range, the generation of a dark region occurred almost equally at all blinking frequencies. Further, when experiments were conducted on two or more samples with different pretilt angles, the sample with a pretilt angle of 89.21° did not produce a dark region at any blinking frequency within the 0.5Hz to 5Hz range. In an environment in which an external force is applied periodically at intervals equivalent to 0.5Hz to 3Hz, a liquid crystal display device with a pretilt angle of 89.21 or less maintains display uniformity if operated at bright/dark blinking frequencies of 0.5Hz to 5Hz.

[Working example 1] To realize high display quality when, for instance, driving a vertically oriented liquid crystal display device using the passive matrix drive method, it is important that the electrooptical characteristics is steep. As a method to improve the steepness of electrooptical characteristics, setting the pretilt angle close to 90° is known. According to experiments conducted by the inventor of the present application, however, to realize a good uniform blinking display even in an environment in which a vibration or external force is applied, there is a need to set the pretilt angle to, for instance, 89.21° or less. In view of this, it is difficult to simultaneously achieve steep electrooptical characteristics and bright display uniformity in an environment in which a vibration or external force is applied.

The inventor of the present application hypothesized that the tilting of the orientation of liquid crystal molecules in a direction different from the orientation direction defined by an orientation treatment as a result of the application of, for instance, a vibration was the cause of the generation of dark regions. The inventor of the present application further hypothesized that this is attributable to the weakness of the vertical orientation control that the boundary between the liquid crystal layer and vertically oriented film has in a vertically oriented liquid crystal display element. Based on these hypothesize, the inventor of the present application devised a liquid crystal display device capable of producing a good uniform display even at a pretilt angle close to 90° by enhancing the vertical orientation control. This liquid crystal display device is also capable of reconciling, for instance, steep electrooptical characteristics and the uniformity of a bright display in an environment in which a vibration or external force is applied.

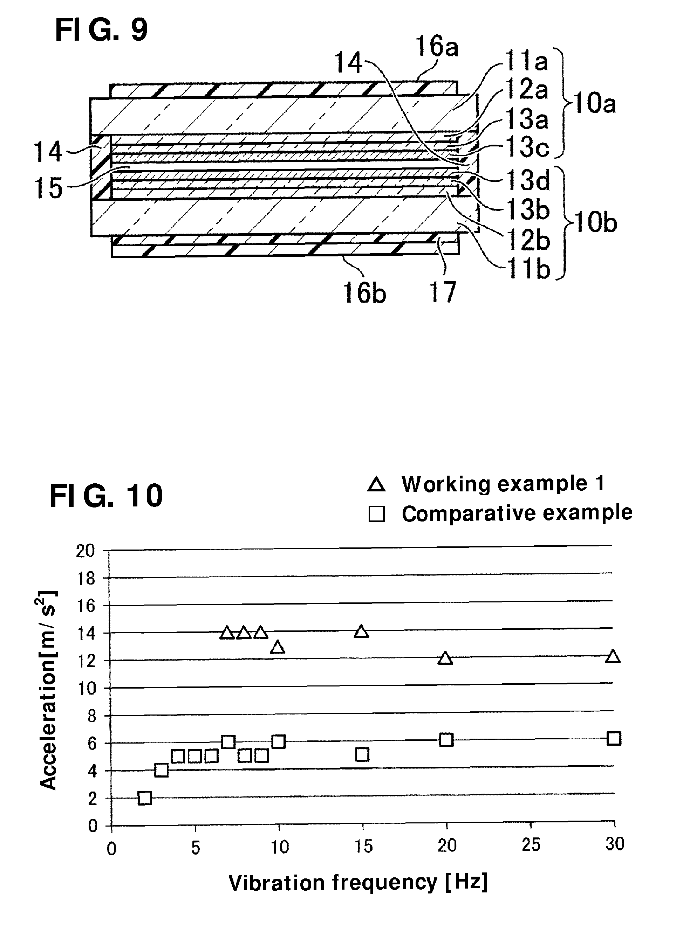

Fig. 9 is a schematic cross-sectional view illustrating a part (liquid crystal display element portion) of the monodomain vertically oriented liquid crystal display device under working example 1. It differs from the liquid crystal display element illustrated in Fig. 1A in that it features orientation control reinforcing layers 13c and 13d formed on the liquid crystal layer 15-side surfaces of, respectively, vertically oriented films 13a and 13b (between, respectively, vertically oriented films 13a and 13b, on the one hand, and the liquid crystal layer 15, on the other) in the case of working example 1, over vertically oriented films 13a and 13b. Otherwise, the liquid crystal display device under working example 1 has the same configuration as the liquid crystal display device illustrated in, for instance, Figs. 1A to Fig. 1C.

The preparation method for the liquid crystal display element portion of the liquid crystal display device under working example 1 differs from that for the liquid crystal display element illustrated in Fig. 1A in terms of the steps after the formation of vertically oriented films 13a and 13b, for instance, the liquid crystal injection step.

In the preparation of the liquid crystal display element illustrated in Fig. 1A, liquid crystal material with a negative dielectric anisotropy, $\Delta\varepsilon$, manufactured by DIC Corp. was injected into the empty cell using the vacuum injection method, followed by sealing and heat treatment, to complete the liquid crystal cell. In the case of working example 1, a liquid crystal composition prepared by adding 2wt% of an ultraviolet-curing liquid crystal resin UCL011, manufactured by DIC Corp, to liquid crystal material with a negative dielectric anisotropy, $\Delta\varepsilon$, manufactured by DIC Corp was injected into the empty cell using the vacuum injection method and sealed. After this, the liquid crystal material was irradiated with ultraviolet light having a wavelength of 365nm at an illuminance of about 16mW/cm$^2$ using ultraviolet exposure equipment featuring a high-pressure mercury lamp as the light source so as to achieve an irradiation energy density of 1J/cm$^2$ over the entire surface of the liquid crystal cell. This was followed by the provision of an isotropic-phase heat treatment for 1 hour at a temperature of 120°C, which is more than 20°C higher than the phase transition temperature, to complete the liquid crystal cell.

Though, in the above example, the ultraviolet-curing resin contained in the liquid crystal composition had liquid crystalline properties, non-liquid crystalline ultraviolet-curing resin with good compatibility with liquid crystal material may instead be used.

The inventor of the present application calculated the surface free energies of the liquid crystal layer 15-side surfaces of substrates 10a and 10b for the liquid crystal display element portion of the liquid crystal display device under working example 1 and the liquid crystal display element illustrated in Fig. 1A. The calculations were performed by peeling substrates 10a and 10b from the liquid crystal cell, washing the surfaces that had been in contact with the liquid crystal layer 15 with acetone and removing the liquid crystal material, followed by the measurement of contact angles for pure water and diiodomethane as reagents. While the surface free energies of the liquid crystal layer 15-side surfaces of substrates 10a and 10b from the liquid crystal display element illustrated in Fig. 1A were about 36mN/m, the corresponding figures for working example 1 were about 50mN/m. Based on this result, for instance, it is believed that, in the liquid crystal display device under working example 1, ultraviolet-curing liquid crystal resin layers with a different surface free energy from vertically oriented films 13a and 13b (orientation control reinforcing layers 13c and 13d) were formed over vertically oriented films 13a and 13b.

The pretilt angle of the liquid crystal display device under working example 1 was measured to be 89.52°.

The inventor of the present application visually observed the display uniformity of bright displays when sinusoidal vibrations with vibration frequencies of 2Hz to 30Hz were applied to the liquid crystal display device under working example 1 in the thickness direction thereof (normal direction of the display surface). The liquid crystal display device was driven in the multiplex drive mode with 1/4 duty and 1/3 bias, and an alternating bright/dark blinking display was produced at a blinking frequency of 3Hz.

Fig. 10 is a graph showing accelerations at which display uniformity can no longer be maintained. The horizontal axis of the graph represents the frequency of the sinusoidal vibration applied in units of Hz, while its vertical axis represents the acceleration at which display uniformity can no longer be maintained in units of m/s$^2$. The triangle plot shows the results for the liquid crystal display device under working example 1. The square plot shows the results for the liquid crystal display device illustrated in Figs. 1A to 1C (the sample with a pretilt angle of 89.59°) as a comparative example. The comparative example plot is identical with the square plot in Fig. 3.

With the liquid crystal display device under the comparative example, an impairment in display uniformity occurred at acceleration of 6 m/s$^2$ or less in the vibration frequency range of, for instance, 4Hz to 30Hz. In contrast, the liquid crystal display device under working example 1 did not exhibit an impairment in display uniformity over the vibration frequency range of less than 7Hz, even when sinusoidal vibrations with the maximum acceleration that the vibration testing equipment was capable of generating were applied. It also maintained display uniformity at accelerations less than 12 m/s$^2$ as long as the vibration frequency was in the range of 7Hz or more. The liquid crystal display device under working example 1 is a high-reliability liquid crystal display device capable of maintaining display uniformity against vibrations with large accelerations of, for instance, more than 1 G.

Though the experiment whose results are shown in Fig. 10 was conducted by setting the blinking frequency to 3Hz, similar results will be obtained if blinking frequencies in the 0.5Hz to 5Hz range are used. The liquid crystal display device under working example 1 will also be capable of producing good uniform displays against not only vibrations but also external forces, such as periodic external forces applied at 0.5Hz to 3Hz to bend the substrates.

Ultraviolet-curing liquid crystal resin layers over vertically oriented films 13a and 13b (orientation control reinforcing layers 13c and 13d) has a function to enhance the vertical orientation control over the liquid crystal molecules in the liquid crystal layer 15, and, as such, suppress the tilting of liquid crystal molecules in directions different from the orientation direction defined by an orientation treatment when, for instance, a vibration or external force is applied. For this reason, the liquid crystal display device under working example 1 exhibits high display uniformity. The liquid crystal display device under working example 1 is capable of producing good uniform displays against vibrations and external force even when the pretilt angles is, for instance, larger than 89.21°. It can also simultaneously achieve steep electrooptical characteristics and display uniformity in an environment in which a vibration or external force is applied.

Though the pretilt angle of the liquid crystal display device under working example 1 was 89.52°, at least a comparable effect can be obtained as long as the pretilt angle is 89.52° or less. It suffices that substrates 10a and 10b (oriented films 13a and 13b) are provided with such an orientation treatment as to introduce a pretilt angle 87° or more and 89.52° or less, more preferably 88° or more and 89.52° or less in the liquid crystal molecules of the liquid crystal layer 15. Setting the pretilt angle to 87° or more, more preferably 88° or more, makes it possible to prevent light leakage.

Though the experiment whose results are shown in Fig. 10 was conducted using a liquid crystal display device whose liquid crystal display element and backlight 19 were fixed inside a housing 20, similar results were obtained when the liquid crystal display element and backlight 19 were put into a fully contacting and fixed state without the use of a housing 20.

The liquid crystal display device under working example 1 incorporates a backlight 19 placed on the backside of the liquid crystal display element and a circuit 23 electrically connected to substrates 10a and 10b (electrodes 12a and 12b) and designed to make the liquid crystal display element perform a blinking operation at blinking frequencies of 0.5Hz to 5Hz as shown in, for instance, Figs. 1B and 1C. The circuit 23 is capable of driving the liquid crystal display element in the multiplex drive mode at a duty ratio of, for instance, 1/16 duty or less.

The liquid crystal display device under working example 1 performs a blinking operation at blinking frequencies of 0.5Hz to 5Hz and is capable of maintaining a good uniform display (display uniformity of the display area during bright display periods) against vibrations with vibration frequencies of 30Hz or less, for instance, 2Hz to 30Hz, and external forces applied periodically at frequencies of 0.5Hz to 3Hz. Vibrations may, for instance, be sinusoidal vibrations, applied in the thickness direction of the liquid crystal display device (normal direction of the display surface). External forces may, for instance, be ones that bend substrates 10a and 10b. The liquid crystal display device under working example 1 is capable of maintaining display uniformity against vibrations with accelerations in excess of, for instance, 1 G.

[Working example 2] According to the various experiments conducted by the inventor of the present application, it is possible to turn the liquid crystal display device illustrated in Figs. 1A to 1C, for instance, into the liquid crystal display element portion of a liquid crystal display device that realizes a good uniform display without light leakage or generation of dark regions (liquid crystal display device under working example 2) if substrates 10a and 10b (oriented films 13a and 13b) are provided with such an orientation treatment as to introduce a pretilt angle of 87° or more and 89.21° or less, more preferably 88° or more and 89.21° or less, in the liquid crystal molecules of liquid crystal layer 15. The liquid crystal display device under working example 2 further incorporates a backlight 19 placed on the backside of the liquid crystal display element and a circuit 23 electrically connected to substrates 10a and 10b (electrodes 12a and 12b) and designed to make the liquid crystal display element perform a blinking operation at blinking frequencies of 0.5Hz to 5Hz. The circuit 23 is capable of driving the liquid crystal display element in the multiplex drive mode at a duty ratio of, for instance, 1/16 duty or less.

The liquid crystal display device under working example 2 performs a blinking operation at blinking frequencies of 0.5Hz to 5Hz and is capable of maintaining a good uniform display (display uniformity of the display area during bright display periods) against vibrations with vibration frequencies of 30Hz or less, for instance, 2Hz to 30Hz, and external forces applied periodically at frequencies of 0.5Hz to 3Hz. Vibrations may, for instance, be sinusoidal vibrations, applied in the thickness direction of the liquid crystal display device (normal direction of the display surface). External forces may, for instance, ones that bend substrates 10a and 10b. The liquid crystal display device under working example 2 is capable of maintaining display uniformity against vibrations with accelerations measuring, for instance, about 1.5G or more within the vibration frequency range of, for instance, 6Hz or more.

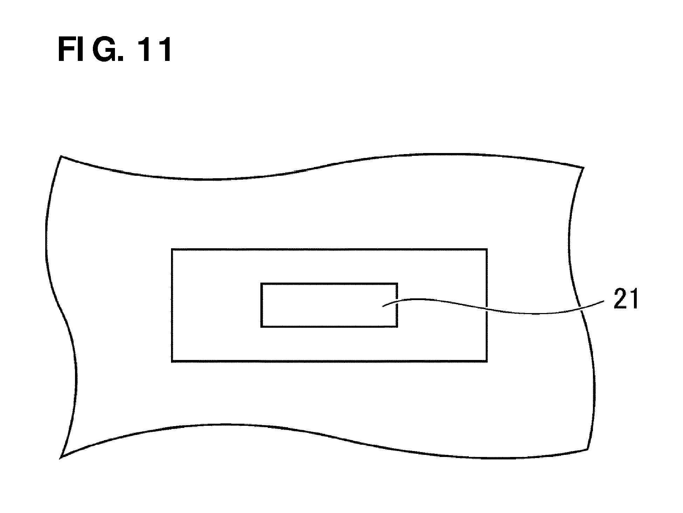

[Working example 3] Fig. 11 is a schematic diagram illustrating part of equipment mounted with the liquid crystal display device from working example 1 or 2 (equipment mounted with a liquid crystal display device under working example 3). Examples of equipment mounted with a liquid crystal display device include motor vehicles, rail vehicles, aircraft, machine presses, and other machines and equipment. Equipment mounted with a liquid crystal display device comprises a liquid crystal display device and an external device that carries the liquid crystal display device and subjects it to vibrations in the frequency range of 30Hz or less, for instance, 2Hz to 30Hz, or periodic external forces in the frequency range of 0.5Hz to 3Hz. Vibrations may, for instance, be sinusoidal vibrations with amplitudes generated in the thickness direction of the liquid crystal display device. External forces may, for instance, be ones that bend substrates 10a and 10b.

Equipment mounted with a liquid crystal display device under working example 3 is capable of performing a blinking liquid crystal display well in the frequency range of 0.5Hz to 5Hz even if a vibration or external force is applied to its liquid crystal display device portion, for instance, as a result of its own operation.

Though the invention was described using specific experiments and examples above, the invention is not limited thereto.

Though, in working examples 1 and 2, both substrates 10a and 10b were provided with an orientation treatment aimed at introducing a pretilt in the liquid crystal layer, it suffices to provide either substrate 10a or 10b with such a treatment.

Though, in working example 1, orientation control reinforcing layers 13c, 13d were formed on both oriented films 13a and 13b, it suffices for such a layer to be just formed on the liquid crystal layer-side surface of either oriented film (between the oriented film and the liquid crystal layer).

Apart from the above, the invention allows numerous other variations, improvements, combinations and the like, and this should be clear to a person skilled in the art.

The liquid crystal display device under working example 1 or 2 is suited for use as, for instance, a high-contrast negative liquid crystal display device. It can be particularly advantageously used as an in-vehicle information display device, such as an HVAC display unit or speed meter.

**Claims**

1. A liquid crystal display device comprising:

   a liquid crystal display element featuring (i) a first and second substrate placed opposite each other that feature, on the pair of opposing surfaces thereof, a pair of opposing electrodes constituting a display area and vertically oriented films at least one of which has been provided with an orientation treatment aimed at introducing a pretilt in a liquid crystal layer, (ii) a liquid crystal layer sandwiched between the first and second substrates that contains liquid crystal material with negative dielectric anisotropy and is vertically oriented with slight tilting, and (iii) a first and second polarizing plates that are placed, in a crossed Nicol arrangement, on the pair of surfaces of the first and second substrates located on the opposite side to the liquid crystal layer and have absorption axes that are each at a 45° angle to the orientation direction of the liquid crystal molecules located in the mid-thickness region of the liquid crystal layer, a light source placed on the second polarizing plate-side of the liquid crystal display element, and a drive circuit electrically connected to the electrodes of the first and second substrates, the drive circuit applying a voltage across the opposing electrodes of the liquid crystal display element to have a display area put on alternating bright/dark displays at frequencies of 0.5Hz to 5Hz, the display area performing a blinking operation powered by the voltage, and the display area maintaining display uniformity during bright display periods when a 2Hz to 30Hz vibration or a 0.5Hz to 3Hz external force is applied, wherein:

   ($\alpha$) a layer designed to reinforce the vertical orientation control over the liquid crystal molecules of the liquid crystal layer is disposed at least between one of the vertically oriented films and the liquid crystal layer, and pretilt angle in the liquid crystal layer of the liquid crystal display element is 87° or more and 89.52° or less, or
   ($\beta$) the pretilt angle in the liquid crystal layer of the liquid crystal display element is 87° or more and 89.21° or less.

2. Equipment mounted with a liquid crystal display device comprising:

   a liquid crystal display device as described in claim 1, and
   an external device carrying the liquid crystal display device and subjecting the liquid crystal display device to 2Hz to 30Hz vibrations or 0.5Hz to 3Hz external forces, wherein
   the display area of the liquid crystal display device maintains display uniformity during bright display periods when the vibrations or external forces are applied.

3. A liquid crystal display device as described in claim 1 or equipment mounted with a liquid crystal display device as described in claim 2, wherein the external forces applied to the liquid crystal display device are ones that bend the first and second substrates of the liquid crystal display element.

4. An ($\alpha$)-type liquid crystal display device as described in claim 1 or ($\alpha$)-type equipment mounted with a liquid crystal display device as described in claim 2, wherein the vibrations applied to the liquid crystal display device have accelerations of 1 G or more.

5. An ($\alpha$)-type liquid crystal display device or ($\alpha$)-type equipment mounted with a liquid crystal display device as described in any one of claims 1 to 4, wherein the layer designed to reinforce the vertical orientation control over the liquid crystal molecules in the liquid crystal layer is formed of an ultraviolet curing liquid crystal resin.

6. A ($\beta$)-type liquid crystal display device as described in claim 1 or ($\beta$)-type equipment mounted with a liquid crystal display device as described in claim 2, wherein:

the pretilt angle is 87° or more and 89.59° or less, and
the display area maintains display uniformity during bright display periods when a vibration with a frequency of 4Hz to 30Hz or an acceleration of 5 m/s$^2$ is applied.

7. A liquid crystal display device or equipment mounted with a liquid crystal display device as described in any one of claims 1 to 6, wherein the liquid crystal layer is a monodomain, vertically oriented one.

8. A liquid crystal display device or equipment mounted with a liquid crystal display device as described in any one of claims 1 to 7, wherein the drive circuit operates the liquid crystal display element in the multiplex drive mode with a duty ratio of 1/16 duty or less.

9. A liquid crystal display device or equipment mounted with a liquid crystal display device as described in any one of claims 1, 2, and 4 to 8, wherein the applied vibrations are sinusoidal vibrations with amplitudes generated in the thickness direction of the liquid crystal display device.

10. A liquid crystal display device or equipment mounted with a liquid crystal display device as described in any one of claims 1 to 9, wherein the liquid crystal display element, light source and drive circuit are placed in a housing.

## FIG. 1A

## FIG. 1B

## FIG. 1C

FIG. 2

FIG. 3

FIG. 4

# FIG. 5

## FIG. 6A

Orientation
direction of mid-
thickness region
molecules of liquid
crystal layer

Absorption axis
direction of bottom
polarizing plate 16b

Absorption
axis
direction
of top
polarizing
plate 16a

15a

## FIG. 6B

Orientation
direction of mid-
thickness region
molecules of liquid
crystal layer

15a

## FIG. 7A

Orientation
direction of
mid-thickness
region
molecules of
liquid crystal
layer defined
by orientation
treatment

Absorption axis
direction of bottom
polarizing plate 16b

Absorption
axis
direction of
top
polarizing
plate 16a

—15a

## FIG. 7B

Orientation
direction of
mid-thickness
region
molecules of
liquid crystal
layer defined
by orientation
treatment

—15a

**FIG. 8A**

15    16a

14    10a
      14
      10b
      16b

20    24    19    18

**FIG. 8B**

24

15a

## FIG. 9

## FIG. 10

△ Working example 1
□ Comparative example

# FIG. 11

21

FIG. 12

FIG. 13A

FIG. 13B

Europäisches
Patentamt

European
Patent Office

Office européen
des brevets

# EUROPEAN SEARCH REPORT

Application Number

EP 14 02 0007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/278643 A1 (IWAMOTO YOSHIHISA [JP]) 13 November 2008 (2008-11-13) | 1-3,6-10 | INV. G02F1/1337 |
| Y | * paragraph [0040] - paragraph [0100]; figures 1-5 * <br> * paragraph [0016] - paragraph [0018]; figures 10A, 10B * <br> ----- | 1-5,7,9, 10 | G02F1/1347 |
| Y | JP 2012 137602 A (SEIKO EPSON CORP) 19 July 2012 (2012-07-19) <br> * paragraph [0020] - paragraph [0079]; figures 1-8 * <br> * paragraph [0098] * <br> ----- | 1-5,7,9, 10 | |
| A | CN 201 159 812 Y (TRULY SEMICONDUCTORS LTD [CN]) 3 December 2008 (2008-12-03) <br> * the whole document * <br> ----- | 1,2,7,10 | |

TECHNICAL FIELDS
SEARCHED      (IPC)

G02F

The present search report has been drawn up for all claims

| Place of search | Date of completion of the search | Examiner |
|---|---|---|
| Munich | 7 May 2014 | Frank, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                   
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 02 0007

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2014

| Patent document cited in search report | | Publication date | Patent family member(s) | | Publication date |
|---|---|---|---|---|---|
| US 2008278643 | A1 | 13-11-2008 | JP<br>JP<br>US<br>US | 5324754 B2<br>2008281752 A<br>2008278643 A1<br>2014078429 A1 | 23-10-2013<br>20-11-2008<br>13-11-2008<br>20-03-2014 |
| JP 2012137602 | A | 19-07-2012 | NONE | | |
| CN 201159812 | Y | 03-12-2008 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2872628 B
- JP 2005234254 A